# EUROPÄISCHE PATENTANMELDUNG

(11) **EP 4 573 900 A1**
(43) Veröffentlichungstag der Anmeldung: **25.06.2025**
(21) Anmeldenummer: 24220161.4
(22) Anmeldetag: 16.12.2024
(51) Int. Cl.: A01M 23/30, A01M 23/38

(54) **SCHLAGFALLE FÜR NAGETIERE**

(30) Priorität: 21.12.2023 DE 202023107576 U
(71) Anmelder: Dienstleistungen Großjung GmbH, 59929 Brilon (DE); Bunse, Jan-Josef, 59929 Brilon (DE)
(72) Erfinder: Bunse, Jan-Josef, 59929 Brilon (DE)
(74) Vertreter: Ostermann, Thomas

(57) **Zusammenfassung**

Die Erfindung betrifft eine Schlagfalle für Nagetiere mit einem Auslöseelement, an dem ein Köder auslegbar ist, einer Spanneinrichtung enthaltend ein Schlagelement und ein Spannelement, die um eine Drehachse schwenkbar angeordnet sind zwischen einer gespannten Stellung und einer ausgelösten Stellung, einem Bodenelement, auf dem das Auslöseelement und die Spanneinrichtung gelagert sind, einem Lagesensor zur Erfassung einer Drehstellung des Schlagelementes undloder des Spannelementes, einer Auswerteeinrichtung zur Auswertung eines von dem Lagesensor erzeugten Signals, einer elektrischen Antriebseinrichtung zum Verbringen der Spanneinrichtung von einer ausgelösten Drehstellung in eine gespannte Drehstellung, wobei der Lagesensor derart ausgebildet ist, dass das von dem Lagesensor erzeugte Signal abhängig ist von einer Drehstellung der Spanneinrichtung.

## Beschreibung

Die Erfindung betrifft eine Schlagfalle für Nagetiere mit einem Auslöseelement, an dem ein Köder auslegbar ist, einer Spanneinrichtung enthaltend ein Schlagelement und ein Spannelement, die um eine Drehachse schwenkbar angeordnet sind zwischen einer gespannten Stellung und einer ausgelösten Stellung, einem Bodenelement, auf dem das Auslöseelement und die Spanneinrichtung gelagert sind, einem Lagesensor zur Erfassung einer Drehstellung des Schlagelementes und/oder des Spannelementes, einer Auswerteeinrichtung zur Auswertung eines von dem Lagesensor erzeugten Signals, einer elektrischen Antriebseinrichtung zum Verbringen der Spanneinrichtung von einer ausgelösten Drehstellung in eine gespannte Drehstellung.

Aus der DE 10 2020 000 519 A1 ist eine Schlagfalle für Nagetiere mit einem Auslöseelement enthaltend einen Köder, einer Spanneinrichtung enthaltend ein Schlagelement und ein Spannelement sowie mit einem Lagesensor zur Ermittlung einer Stellung des Schlagelementes und/oder des Spannelementes bekannt. Der Lagesensor ist Bestandteil einer Sensoreinrichtung, die zusätzlich über einen Bewegungssensor verfügt. Die Sensoreinrichtung ist auf einer der Schlagfalle zugewandten Seite einer Gehäusewandung positioniert, wobei sich die Schlagfalle innerhalb des Gehäuses befindet. Der Lagesensor ist als ein Drei-Achsen-Magnetfeldsensor (Hall-Sensor) ausgebildet, so dass für alle drei Raumachsen ein Steuersignal erzeugt wird. Die bekannte Sensoreinrichtung ermöglicht die Detektion der Schlagfalle in einer gespannten Stellung (Ausgangszustand) und einer ausgelösten Stellung, bei der zum einen das Schlagelement um 90° verdreht wurde oder lediglich um 60° bis 80° (Fangstellung). Hierdurch ist zwar eine Fehlauslösung der Schlagfalle erkennbar. Der Aufwand für die Detektion ist relativ hoch.

Aus der WO 2022/180052 A1 ist eine Schlagfalle für Nagetiere bekannt, die eine Spanneinrichtung enthaltend ein Schlagelement und ein Spannelement aufweist, so dass das Schlagelement nach Betätigung eines Auslöseelementes durch das Nagetier von einer gespannten Stellung in eine erfolgreiche Fangstellung (nichtfehlausgelöste Stellung) bringbar ist, in der das Nagetier gefangen ist. Ferner umfasst die Schlagfalle eine Fehlauslöseeinrichtung, mittels derer die Spanneinrichtung nach einer Fehlauslösung, in der die Spanneinrichtung ausgelöst wurde, ohne dass sich ein Nagetier in der Schlagfalle befindet, wieder in den gespannten Ausgangszustand verbracht wird. Zur Erkennung der Fehlauslösung ist eine Fehlauslöseerkennungseinrichtung mit einem Endschalter vorgesehen, der an einem freien Ende eines von einer Bodenwandung der Schlagfalle nach oben hin abragenden Stabes angeordnet ist. Sobald das Spannelement um 90° verdreht worden ist und sich in der aufrechten Position befindet unter Kontaktierung des Endschalters, wird dieser Endschalter ausgelöst. Nachteilig an der bekannten Schlagfalle ist, dass mittels des Endschalters lediglich die Fehlauslösung erkannt werden kann. Befindet sich die Spanneinrichtung in einer nichtfehlausgelösten Fangstellung, kann dieser Zustand nur erkannt werden, wenn zusätzlich ein weiterer Schalter an der Bodenwandung der Schlagfalle vorgesehen ist. Dieser löst aus, wenn die Spanneinrichtung sich von der gespannten Ausgangsstellung in die Fangstellung oder in die fehlausgelöste Stellung bewegt hat.

Aufgabe der vorliegenden Erfindung ist es, eine Schlagfalle für Nagetiere derart weiterzubilden, dass auf einfache Weise eine Fehlauslösung der Schlagfalle erkannt und ein Weiterbetrieb derselben ermöglicht wird.

Zur Lösung dieser Aufgabe ist die Erfindung in Verbindung mit dem Oberbegriff des Patentanspruchs 1 dadurch gekennzeichnet, dass der Lagesensor derart ausgebildet ist, dass das von dem Lagesensor erzeugte Signal abhängig ist von einer Drehstellung der Spanneinrichtung.

Der besondere Vorteil der Erfindung besteht darin, dass auf einfache Weise eine Fehlauslösung der Schlagfalle erkannt und eine Spanneinrichtung selbsttätig aus der fehlausgelösten Stellung in eine gespannte Stellung zurück verbracht wird (Selbstspannung nach Fehlauslösung). Schlagfallen, die im Bereich der Lebensmittelindustrie, insbesondere in Supermärkten, eingesetzt werden, sind nach Fehlauslösung sofort wieder einsetzbar, ohne dass eine Person die Schlagfalle wieder aktivieren muss. Vorteilhaft ist hierdurch ein Dauerbetrieb der Schlagfalle bis zum Fangen des Nagetieres gewährleistet. Insbesondere kann eine 24-Stunden Kontrollfrist der Schädlingsbekämpfer eingehalten werden. Bisher waren Kontrollgänge durch Personen notwendig, um die Einsatzbereitschaft der Falle zu überprüfen. Durch die Erfindung werden die Kontrollgänge auf die tatsächlichen Fänge reduziert. Vorteilhaft ermöglicht die Erfindung, dass durch den Lagesensor mindestens zwei unterschiedliche Zustände, nämlich eine fehlausgelöste Stellung der Spanneinrichtung sowie eine nichtfehlausgelöste Fangstellung der Spanneinrichtung und vorzugsweise die gespannte Ausgangsstellung der Spanneinrichtung erkannt werden können. Vorteilhaft kann hierdurch der Bauteileaufwand reduziert werden.

Nach einer Weiterbildung der Erfindung kann der Lagesensor als ein Magnetsensor oder als ein optoelektronischer Sensor oder als ein mechanischer Sensor ausgebildet sein. Die Art des Lagesensors hängt vom Einsatzort ab. Wesentlich ist, dass der Lagesensor in unmittelbarer Nähe zu der Schlagfalle undloder Bauteilen der Schlagfalle bzw. der Spanneinrichtung angeordnet ist. Insbesondere befindet sich der Lagesensor in einem Bereich der Schlagfalle, in dem sich ein Spannelement und/oder Schlagelement der Spanneinrichtung in einer zu erkennenden Stellung derselben befindet.

Nach einer bevorzugten Ausführungsform der Erfindung ist lediglich ein einziger Magnetsensor vorgesehen, der im Bereich einer Wandung des Schlagfallengehäuses, vorzugsweise in einem zu dem Spannelement in der Ausgangsstellung desselben nahen Bereich des Schlagfallengehäuses, angeordnet. Ein Magnetfelderreger kann als an dem Spannelement befestigter Permanentmagnet oder als ein Permanentmagnetabschnitt des Spannelementes ausgebildet sein. Vorteilhaft kann die Schlagfalle hierdurch nach oben hin offen ausgebildet sein. In Abhängigkeit von der Drehbewegung bzw. Drehstellung ragen nur das Spannelement bzw. Schlagelement von einer Bodenwandung des Schlagfallengehäuses ab. Zusätzliche aufrechte Teile sind nicht erforderlich.

Nach einer weiteren Ausführungsform der Erfindung ist der mechanische Sensor als ein Drehwinkelgeber drehbar ausgebildet, der mit einer Achse der Spanneinrichtung fest verbunden ist. Dieser Sensor ermöglicht eine relativ genaue Bestimmung der Drehstellung der Spanneinrichtung. Eine seitlich ausladende Anordnung der Schlagfalle wird hierbei in Kauf genommen.

Nach einer alternativen Ausführungsform der Erfindung sind zwei Magnetsensoren an einer gemeinsamen Wandung derart angeordnet, dass der erste Magnetsensor ein Spannelement der Spanneinrichtung in der gespannten Ausgangsstellung erkennt, und ein zweiter Magnetsensor das Spannelement in der fehlausgelösten Stellung der Spanneinrichtung erkennt. Der Sensorsignalaufwand kann hierdurch reduziert werden.

Nach einer bevorzugten Ausführungsform der Erfindung ist lediglich ein einziger Lagesensor an einem Bodenelement der Schlagfalle angeordnet, wobei verschiedene Stellungen des Schlagelementes bzw. Spannelementes erkannt werden können. Vorteilhaft ist der Lagesensor in der Schlagfalle integriert angeordnet. Insbesondere ist der Lagesensor fest mit einem Gehäuseteil der Schlagfalle verbunden, so dass die Schlagfalle einen kompakten Aufbau aufweist. Innerhalb des Gehäuses der Schlagfalle ist eine Auswerteeinrichtung zur Auswertung des von dem Lagesensor erzeugten Signales angeordnet. Alternativ kann die Auswerteeinrichtung auch über eine elektrische Verbindung in einem gesonderten Gehäuse, das vorzugsweise unmittelbar an dem Gehäuse der Schlagfalle anschließt, angeordnet sein.

Nach einer alternativen Ausführungsform der Erfindung sind zwei Lagesensoren vorgesehen, die vorzugsweise an gegenüberliegenden Seiten des Gehäuses der Schlagfalle angebracht sind und unterschiedliche Stellungen des Schlagelementes undloder des Spannelementes detektieren. Vorteilhaft wird hierdurch eine erhöhte Detektiersicherheit geschaffen.

Nach einer Weiterbildung der Erfindung dient eine Auswerteeinheit nicht nur zur Auswertung des Sensorsignals, sondern auch zu einer Ansteuerung einer elektrischen Antriebseinrichtung, so dass im Fall einer Fehlauslösung die Schlagfalle wieder in die Ausgangsstellung, nämlich in die gespannte Stellung, verbracht werden kann.

Nach einer Weiterbildung der Erfindung weist die elektrische Antriebseinrichtung einen Servomotor oder einen Getriebemotor auf, so dass eine genaue Einstellung der Spanneinrichtung in der Ausgangsstellung gewährleistet ist.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Darstellung einer Schlagfalle nach einer ersten Ausführungsform mit einem einzigen Lagesensor,
- Figur 2: eine perspektivische Darstellung der Schlagfalle nach einer zweiten Ausführungsform mit zwei Lagesensoren,
- Figur 3: eine perspektivische Darstellung eines Tunnels mit einem oberhalb desselben angeordneten Nebengehäuse nach einer ersten Ausführungsform, innerhalb dessen zwei Schlagfallen angeordnet sind,
- Figur 4: eine Darstellung der Schlagfallen innerhalb des Tunnels gemäß Figur 3 mit eingezeichneten Spannseilen,
- Figur 5: eine Innenansicht des eine Leiterplatte und zwei Antriebseinrichtungen aufweisenden Nebengehäuses, das sich gemäß Figur 3 oberhalb des Tunnels befindet,
- Figur 6: eine Darstellung eines Tunnels mit seitlichem Nebengehäuse,
- Figur 7: eine schematische Seitenansicht der Schlagfalle in unterschiedlichen Drehstellungen der Spanneinrichtung und
- Figur 8: eine Anordnung von nebeneinander angeordneten Schlagfallen.

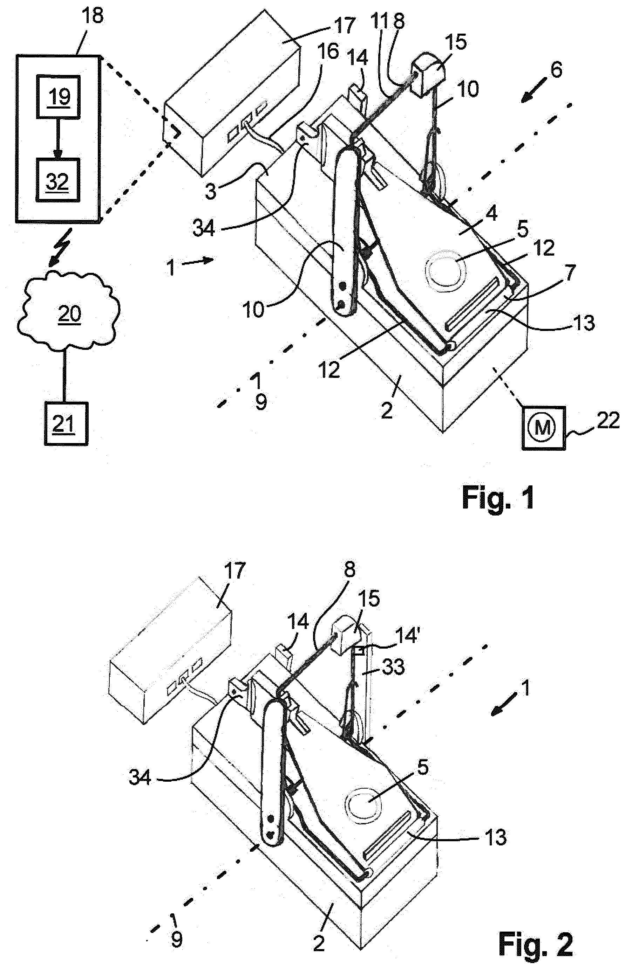

Nach einer ersten Ausführungsform der Erfindung gemäß Figur 1 ist eine Schlagfalle 1 für Nagetiere vorgesehen, die ein Gehäuse 2 aufweist, an dessen Oberseite ein als Bodenwandung 3 ausgebildetes Bodenelement angeordnet ist. An dem Bodenelement 3 ist ein Auslöseelement 4 mit an einem Köderplatz 5 desselben zu platzierenden Köders beweglich angeordnet.

Ferner ist an der Bodenwandung 3 eine Spanneinrichtung 6 mit einem Schlagelement 7 und einem 90° versetzt zu demselben angeordneten Spannelement 8 schwenkbar um eine Drehachse 9 gelagert. Das Schlagelement 7 ist vorzugsweise fest und drehsicher zu dem Spannelement 8 angeordnet.

Das Spannelement 8 ist vorzugsweise aus einem metallischen Material hergestellt, vorzugsweise Metalldraht, und U-förmig geformt. Das Spannelement 8 weist zwei gegenüberliegende Spannarme 10 und ein dieselben verbindende Spannstrebe 11 auf.

Das Schlagelement 7 ist ebenfalls U-förmig ausgebildet mit zwei gegenüberliegenden Schlagarmen 12 und einen dieselbe verbindenden Schlagstrebe 13.

In Figur 1 befindet sich die Schlagfalle 1 bzw. die Spanneinrichtung 6 in einer fehlausgelösten Drehstellung, in der das Spannelement 8 aufrecht und das Schlagelement 7 in der Ebene der Bodenwandung 3 angeordnet sind. Eine Öffnungsebene des Spannelementes 8 verläuft somit senkrecht zu der ebenen Bodenwandung 3. Eine Öffnungsebene des Schlagelementes 7 verläuft parallel zu der Erstreckung der Bodenwandung 3.

Im Vergleich zu einer gespannten Drehstellung (Ausgangsstellung) befinden sich das Schlagelement 7 und das Spannelement 8 der Spanneinrichtung 6 in einer um 90° um die Drehachse 9 versetzten Stellung.

In der gespannten Drehstellung ist das Spannelement 8 an einem mit dem Auslöseelement 4 gekoppelten Festlegelement 34 arretiert. Beispielsweise kann das Festlegelement 33 als bewegbarer Haken ausgebildet sein, der mit Auslösung der Schlagfalle 1 das vorgespannte Spannelement 8 freigibt, so dass es aufgrund der Federkraft in eine Drehstellung verbracht wird, in der das Schlagelement 7 auf einen Widerstand (Nagetier 35) stößt.

In einer nicht fehlausgelösten Drehstellung, nämlich in einer ausgelösten Fangstellung, würden sich das Spannelement 8 und das Schlagelement 7 in einer bezogen auf die gespannte Drehstellung um 60° bis 80° verdrehten Lage befinden, da das eingeklemmte Nagetier 35 sich zwischen der Bodenwandung 3 und der Schlagstrebe 13 befindet.

Zur Erkennung der in Figur 1 dargestellten fehlausgelösten Drehstellung der Spanneinrichtung 6 ist ein Lagesensor 14 an dem Bodenelement 6 und/oder dem Gehäuse 2 so befestigt, dass sein detektierender Erfassungsbereich oberhalb der Bodenwandung 3 verläuft. Insbesondere ist der Lagesensor 14 derart ausgebildet, dass die aufrechte Stellung der Spannstrebe 11 erfasst werden kann. Wenn der Lagesensor 14 als ein Magnetsensor, insbesondere als ein 3D-Hallsensor, ausgebildet ist, wirkt dieser mit einem an dem Spannelement 8 bzw. an der Spannstrebe 11 angeordneten Permanentmagneten 15 als Magnetfelderreger zusammen, wobei aufgrund der magnetischen Wechselwirkung auf die Drehstellung des Spannelementes 8 in einer fehlausgelösten aufrechten Drehstellung gemäß Figur 1 oder einer nicht fehlausgelösten Stellung, bei der das Spannelement 8 nicht um 90°, sondern lediglich zwischen 60° und 80° aus der gespannten Stellung verdreht worden ist, erkannt werden kann.

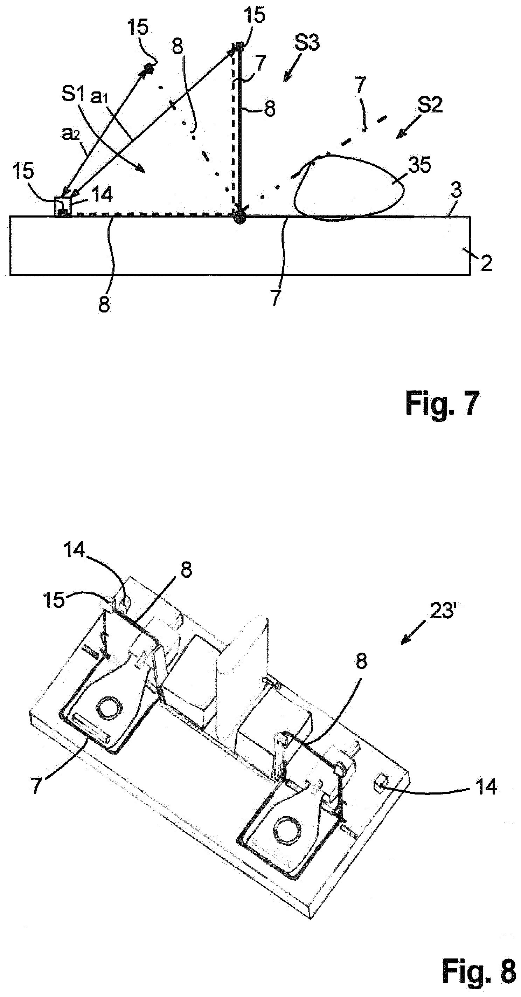

Wie aus Figur 7 ersichtlich ist, befindet sich der Permanentmagnet 15 in einer ersten Drehstellung S1 der Spanneinrichtung 6, nämlich in der gespannten Drehstellung (Ausgangsstellung), in unmittelbarer Nähe zu dem Magnetsensor 14, s. gestrichelte Linie. In einer zweiten Drehstellung S2 der Spanneinrichtung 6, nämlich in der fehlausgelösten Drehstellung, befindet sich der Permanentmagnet 15 in einem maximalen Abstand a₁ zu dem Magnetsensor 14, s. durchgezogene Linie. In einer dritten Drehstellung S3, nämlich der ausgelösten Fangstellung, befindet sich der Permanentmagnet 15 in einem Abstand a₂ zu dem Magnetsensor 14, der kleiner ist als der Abstand a₁ des Permanentmagneten 15 in der zweiten Drehstellung S2. Auf diese Weise wird in dem Magnetsensor 14 in Abhängigkeit von der Drehstellung der Spanneinrichtung 6 ein unterschiedlicher Signalstrom erzeugt, der dann in der Auswerteeinrichtung 18 ausgewertet wird.

Nach einer nicht dargestellten alternativen Ausführungsform der Erfindung kann statt eines an dem Spannelement 8, vorzugsweise in einem Eckbereich des Spannelementes 8, angebrachten Permanentmagneten 15 das Spannelement 8 selbst einen Magnetabschnitt aufweisen. Hierdurch weist das Spannelement 8 entlang seiner Erstreckung eine homogene Dichte auf.

Der Lagesensor 14 ist über eine elektrische Verbindung 16 mit einer in einem Auswertegehäuse 17 angeordneten Auswerteeinrichtung 18 elektrisch verbunden. Die Auswerteeinrichtung 18 dient zur Auswertung des von dem Lagesensor 14 erzeugten Signales, um eine Fehlauslösung zu erkennen. Hierzu weist die Auswerteeinrichtung 18 eine Fehlauslösungserkennungseinrichtung 19 auf, die in Abhängigkeit von dem durch den Lagesensor 14 erzeugten Signal prüft, ob sich das Schlagelement 7 in einer ausgelösten Fangstellung oder in einer ausgelösten Fehlstellung gemäß Figur 1 befindet. Die Fehlauslöseerkennungseinrichtung 19 umfasst vorzugsweise einen Mikrokontroller und eine Sendeeinheit 32 zur Übertragung von Schlagfallen 1, 1' bezogenen Daten über ein Funknetz 20 an eine externe Recheneinheit 21. Auf diese Weise kann der aktuelle Zustand der Schlagfalle 1 extern überwacht werden Fernüberwachung). Über die Sendeeinheit 32 wird nicht nur der Zustand der Fehlauslösung, sondern auch der Zustand der ausgelösten Fangstellung übertragen. Vorzugsweise wird in regelmäßigen Zeitabständen (Stundenbereich) Signale, wie beispielsweise auch Funkstärke, Batterieladezustand etc., übertragen, um der gesetzlich vorgegebenen 24-Stunden-Kontrollftrist zu genügen. In der Auswerteeinrichtung kann eine Positionsbestimmung der Schlagfalle 1 mittels eines GNSS-Systems integriert sein. Dies dient dem Diebstahlschutz bzw. einfachen Verortung der Schlagfallen in einem weitläufigen Industriegelände.

Die Fehlauslöseerkennungseinrichtung 19 umfasst ein Erkennungsprogramm, das in der Fehlauslöseeinrichtung 19 fest verdrahtet oder als Software ausgebildet sein kann, so dass insbesondere die fehlausgelöste Stellung erkannt und eine Maßnahme zur Beseitigung der fehlausgelösten Stellung ergriffen werden kann. Zu diesem Zweck ist in dem Gehäuse 2 der Schlagfalle 1 eine elektrische Antriebseinrichtung 22 angeordnet, die über die elektrische Verbindung 16 (Kabel) mit der Auswerteeinrichtung 18 verbunden ist. Die elektrische Antriebseinrichtung 22 ist vorzugsweise als ein Servomotor oder als ein Getriebemotor ausgebildet.

Die elektrische Antriebseinrichtung 22 ist mit mindestens einem Spannarm 10 des Spannelementes 8 und/oder Schlagarm 12 des Schlagelementes 7 gekoppelt, so dass mit entsprechender Aktivierung der elektrischen Antriebseinrichtung 22 der Spannarm 10 aus der aufrechten fehlausgelösten Stellung wieder zurück in die um 90° verdrehte Ausgangsstellung verdreht werden kann. Die elektrische Antriebseinrichtung 22 ist mit einem Schwenkarm verbunden, der unter Anlage an dem Spannarm 10 diesen entgegen der Federkraft der Schlagfalle 1 von der ausgelösten Stellung in die gespannte Stellung verschwenkt, in der das Spannelement 8 die Ausgangsstellung einnimmt und erst wieder durch Betätigung des Auslöseelementes 4 (durch das Nagetier) wieder freigegeben wird, um den tierschutzgerechten Schlagimpuls zu erzeugen. In der Ausgangsstellung des Spannarms 10 wird der Schwenkarm wieder in seine Ausgangsstellung in der Ebene der Bodenelementes 3 zurückbewegt.

Sobald die Auswerteeinrichtung 18 mittels der Fehlauslöseerkennungseinrichtung 19 erkannt hat, dass sich die Spanneinrichtung 6 in der fehlausgelösten Stellung ( 90°-Stellung, also um 90° verschwenkt bezogen auf die gespannte Stellung) befindet, wird durch die Auswerteeinrichtung 18 ein Ansteuersignal erzeugt, mittels dessen die elektrische Antriebseinrichtung 22 angesteuert wird in dem Sinne, dass die Spanneinrichtung 6 unter Verschwenkung des Spannelementes 8 und des Schlagelementes 7 um 90° wieder in die Ausgangsstellung verbracht wird. In der Ausgangsstellung ist das Spannelement 8 über das Auslöseelement 4 gespannt angeordnet. Die elektrische Antriebseinrichtung 22 befindet sich nun in einer zu der Spanneinrichtung 6 entkoppelten Stellung, so dass eine weitere Auslösung des Spannelementes 8 gewährleistet ist.

Es findet somit eine selbsttätige Verdrehung des Spannelementes 8 aus der fehlausgelösten Stellung in die gespannte Stellung statt, sobald eine Fehlauslösung erkannt worden ist. Bei einer ausgelösten Fangstellung, die ebenfalls durch die Auswerteeinrichtung 18 unter Auswertung von Signalen des Lagesensors 14 erkannt wird, erfolgt kein Ansteuersignal der elektrischen Antriebseinrichtung 22. Das Spannelement 8 kann in diesem Fall von einer Person nach Entfernen des getöteten Nagetieres in die Ausgangsstellung entgegen der in der Spanneinrichtung 6 integrierten Federspannung verbracht werden. Alternativ kann das Spannelement 8 mittels der elektrischen Antriebseinrichtung 22 in die gespannte Ausgangsstellung verbracht werden, siehe oben. Vorzugsweise wird die Spanneinrichtung 6 aus der ausgelösten Fangdrehstellung S3 in die gespannte Drehstellung S1 mittels der Antriebseinrichtung 22 erst verbracht, nachdem ein Benutzer der Schlagfalle 1 ein Freigabesignal erzeugt hat, beispielsweise mittels Drückens einer Quittungstaste. Auf diese Weise wird ein unerwünschtes Quetschen der Bedienperson beim Entfernen des toten Nagetieres 35 aus der Schlagfalle 1 vermieden.

Alternativ ist die Fehlauslöseerkennungseinrichtung 19 derart eingerichtet, dass das Ansteuersignal für die elektrische Antriebseinrichtung 22, mittels derer das Spannelement 8 wieder in die gespannte Stellung verbracht wird, zeitverzögert, beispielsweise um eine Stunde zeitverzögert, erfolgt, damit eine sichere Tötung des Nagetiers erfolgt. Alternativ oder zusätzlich kann das zu dem Auslösezeitpunkt zeitverzögerte Ansteuersignal bei einem Auswerteergebnis erfolgen, bei dem mittles des Lagesensors 14, 14' ein Winkel des ausgelösten Spannelementes 8 in einem Winkelbereich zwischen 70° und 90° festgestellt worden ist, also keine eindeutige Fehlauslösung, sondern eine mögliche Fangstellung vorliegt.

Nach einer alternativen Ausführungsform der Erfindung gemäß Figur 2 ist im Unterschied zu der Ausführungsform nach Figur 1 zusätzlich ein zweiter Lagesensor 14' vorgesehen, der mit der Drehachse 9 eine Ebene aufspannt, die senkrecht zu der Bodenwandung 3 verläuft. Der zweite Lagesensor 14' ist in Höhe der Spannstrebe 11 angeordnet, wenn sich das Spannelement 8 in der fehlausgelösten, zu der Bodenwandung 3 aufrechten Stellung befindet. Der zweite Lagesensor 14' ist somit ortsfern zu der Bodenwandung 3 angeordnet, wohingegen der erste Lagesensor 14 in der Nähe der Bodenwandung 3 angeordnet ist. Der zweite Lagesensor 14' ist an einem fest mit dem Gehäuse 2 verbundenen Stab 33 befestigt.

Der zweite Lagesensor 14' ist derart angeordnet, dass er sich in der Nähe zu dem Permanentmagneten 15 des Spannelementes 8 in der fehlausgelösten Stellung desselben befindet.

Vorzugsweise sind der erste Lagesensor 14 und der zweite Lagesensor 14' in einer gemeinsamen Ebene angeordnet, die senkrecht zu der Drehachse 9 verläuft. Beide Lagesensoren 14, 14' sind auf einer gleichen Seite eines Randes des Gehäuses 2 angeordnet.

Der erste Lagesensor 14 und der zweite Lagesensor 14' sind derart ausgebildet, dass sie lediglich ein Sensorsignal erzeugen, wenn sich der Permanentmagnet 15 bzw. das Spannelement 8 in der Nähe des ersten Lagesensors 14 bzw. zweiten Lagesensors 14' befindet. Der erste Lagesensor 14 und der zweite Lagesensor 14' sind somit dazu eingerichtet, lediglich einen dualen Zustand zu erkennen, entweder Aktivierung bei unmittelbarer Nähe zu dem Permanentmagneten 15 oder Nichtaktivierung bei entfernter Anordnung zu dem Permanentmagneten 15. Vorteilhaft kann diese Lösung bei extremen Randbedingungen, wie beispielsweise in/unter Kühlmöbeln, eingesetzt werden.

Der erste Lagesensor 14 und der zweite Lagesensor 14' sind vorzugsweise gleich ausgebildet. Sie können beispielsweise als ein einfacher "Hall Sensor" (Magnetsensor) oder als ein Reed-Sensor (Reed-Schalter) oder als ein optoelektronischer Sensor oder als ein mechanischer Sensor ausgebildet sein. Als mechanischer Sensor kann er beispielsweise als Mikroschalter/-taste ausgebildet sein. In diesem Fall muss der Gegenpart nicht als ein Permanentmagnet 15 ausgebildet sein, sondern als ein Schaltkörper, der an dem Spannelement 8 befestigt ist. Alternativ kann der Schaltkörper auch weggelassen werden, so dass das Spannelement 8 und/oder das Schlagelement 7 mit dem Mikroschalter/-taste zusammenwirkt.

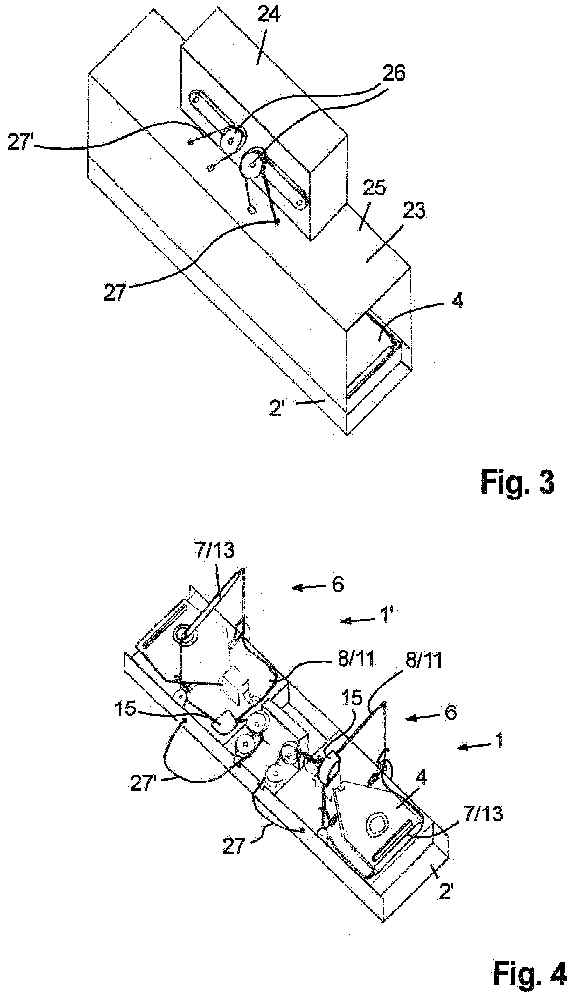

Nach einer weiteren Ausführungsform der Erfindung gemäß den Figuren 3 bis 5 sind zwei Schlagfallen 1, 1' auf einem gemeinsamen Gehäuse 2' in einem Tunnel 23 angeordnet. Oberhalb des Tunnels 23 ist die elektrische Antriebseinrichtung 22 in einem Nebengehäuse 24 angeordnet, das an einer oberen Wandung 25 des Tunnels 23 befestigt ist. Die elektrische Antriebseinrichtung 22 ist über an Umlenkrollen 26 umgelenkte Seile 27, 27' mit der Spanneinrichtung 6 gekoppelt.

Gleiche Bauteile bzw. Bauteilfunktionen der Ausführungsbeispiele sind mit den gleichen Bezugszeichen versehen.

In Figur 4 ist ersichtlich, dass die erste Schlagfalle 1 sich in einer fehlausgelösten Stellung und die zweite Schlagfalle 1' in einer gespannten Stellung befindet. Der Permanentmagnet 15 der zweiten Schlagfalle 1' befindet sich in einer zu der Bodenwandung 3, 3' derselben nahen Lage.

In dem Nebengehäuse 24 befinden sich zwei elektrische Ansteuereinrichtungen 22, 22', wobei eine erste elektrische Antriebseinrichtung 22 über die Seilverbindung 27 mit dem Spannelement 8 der ersten Schlagfalle 1 und die zweite Antriebseinrichtung 22' über die Seilverbindung 27' mit dem Spannelement 8 der zweiten Schlagfalle 1' gekoppelt ist. Vorzugsweise ist die Seilverbindung 27 lösbar mit der elektrischen Antriebseinrichtung 22 verbunden, so dass die obere Wandung 25 des Tunnels 23 abnehmbar ist.

Darüber hinaus ist in dem Nebengehäuse 24 eine Leiterplatte 28 angeordnet, auf der die Auswerteeinrichtung 18 sowie die jeweils den Schlagfallen 1, 1' zugeordneten Lagesensoren 29, 30 angeordnet sind. Erste Lagesensoren 29 sind derart in einer Aussparung der Leiterplatte 28 mit einem Erfassungsbereich unterhalb der Leiterplatte 28, also in Richtung der Schlagfallen 1, 1' gerichtet angeordnet, so dass die Spannelemente 8 in der gespannten Stellung erkannt werden können.

Die zweiten Lagesensoren 30 sind auf der Leiterplatte 28 unter Bildung eines Erfassungsbereiches in Richtung der ersten bzw. zweiten Schlagfalle 1, 1' angeordnet, dass sie die Spannelemente 8 in der entspannten Fehlauslösung detektieren können. Vorteilhaft befinden sich die Lagesensoren 29, 30 somit mit den weiteren elektronischen Bauteilen auf der gemeinsamen Leiterplatte 28.

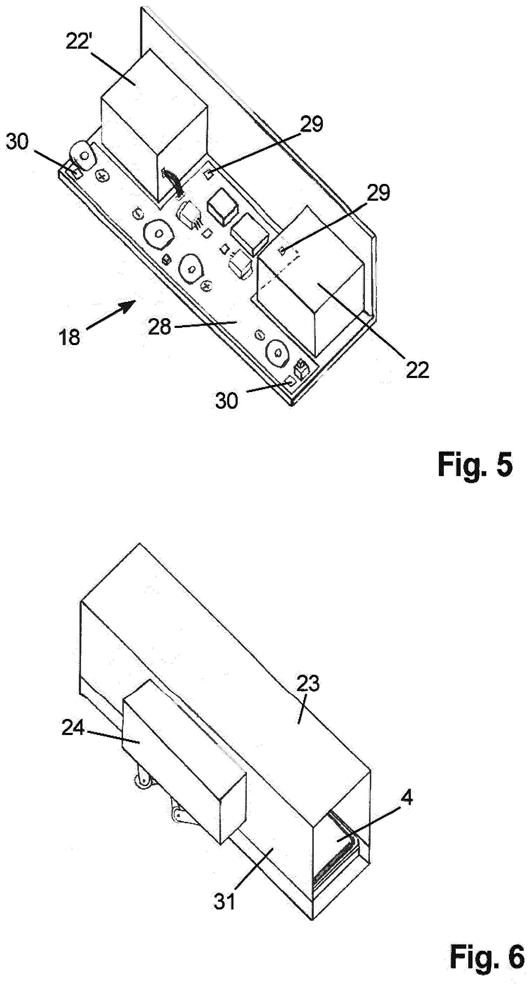

Nach einer weiteren Ausführungsform der Erfindung gemäß Figur 6 ist das Nebengehäuse 24 nicht oberhalb des Tunnels 23, sondern an einer Seitenwandung 31 des Tunnels 23 angeordnet. Bei dieser Ausführungsform befindet sich die Leiterplatte 28 in einer zu der Bodenwandung 3, 3' senkrechten Stellung, und zwar unmittelbar anschließend zu dem Innenraum des Tunnels 23. Im Bereich der Lagesensoren 29, 30 weist die Seitenwandung 31 vorzugsweise entsprechende Öffnungen auf, damit die Lagesensoren 29, 30 in Wirkverbindung treten können mit den Spannelementen 8 der ersten Schlagfalle 1 und zweiten Schlagfalle 1'.

Der erste Lagesensor 29 und der zweite Lagesensor 30 können gleich ausgebildet sein, insbesondere als Magnetfeldsensor oder als ein optoelektronischer Sensor oder als ein mechanischer Sensor.

Vorzugsweise wird die elektrische Antriebseinrichtung 22, 22' durch einen Stromsensor überwacht. Dieser dient dazu, die elektrische Antriebseinrichtung 22, 22' gegen Überlastung zu schützen, wenn beispielsweise Blockierungen durch Verformung des Spannelementes 8 bzw. des Schlagelementes 7 auftreten oder durch Verschmutzung, Korrosion oder durch menschliche Interaktionen.

Außerdem wird hierdurch die Schlagfalle 1, 1' geschützt und erkannt, wann diese wieder definitiv eingerastet ist in der gespannten Stellung. Es kommt dabei zur Erkennung des annähernden Blockierstroms der Antriebseinrichtung 22, 22'. Insbesondere wird dadurch sichergestellt, dass das System nicht durch Finger, Hände, etc. blockiert wird, da teilweise im Spannvorgang "hohe" Kräfte eingesetzt werden.

Ein erneuter Einrastvorgang des Spannelementes 8 wird ausgelöst, wenn mittels des Stromsensors eine erhöhte Stromstärke ermittelt wird. Eine erhöhte Stromstärke erfolgt bei Last, wenn das Spannelement 8 gegen das Befestigungselement 34 drückt, ohne dass es an dem Befestigungselement 34 eingerastet ist. Bei Feststellung der erhöhten Stromaufnahme wird dann ein erneuter Einrastvorgang ausgelöst. Vorteilhaft ist hierdurch ein sicheres Einrasten des Spannelementes 8 an dem Befestigungselement 34 gewährleistet. Nach einer alternativen Ausführungsform der Erfindung ist der Lagesensor als ein mechanischer Sensor, insbesondere als ein Drehwinkel detektierender Sensor, ausgebildet, der beispielsweise als Drehwinkelgeber fest mit einer drehbaren Achse der Spanneinrichtung 6 verbunden ist. Der Drehwinkelgeber ist in axialer Verlängerung der Achse der Spanneinrichtung 6 angeordnet, so dass die Schlagfalle seitlich ausladend ausgebildet ist. Alternativ kann er auch als Winkellagegeber, beispielsweise analog oder digital, ausgebildet sein.

Nach einer nicht dargestellten alternativen Ausführungsform der Erfindung kann das Spannelement 8 und/oder das Schlagelement 7 statt geradlinige Scheitelabschnitte, deren freien Enden mit der drehbaren Achse der Spanneinrichtung 6 verbunden sind, auch zumindest teilweise bogenförmig ausgebildet sein. Hierdurch ist beispielsweise eine Verbreiterung des Spann- bzw. Schlagelementes 7, 8 seitlich über den Rand des Bodenelementes 3 hinaus möglich.

Nach einer alternativen Ausführungsform des Tunnels 23 kann ein Tunnel 23' vorgesehen sein, in dem mindestens zwei Schlagfallen 1, 1` nicht hintereinander, sondern nebeneinander angeordnet sind.

Das als Tunnel 23, 23' gebildete Gehäuse ist vorzugsweise verschließbar bzw. zugriffsgeschützt ausgebildet, so dass ein unbeabsichtigtes Auslösen der Schlagfalle durch eine Person verhindert wird.

Die Antriebseinrichtung 22 ist vorzugsweise durch Kraftkopplung mit der Spanneinrichtung 6 verbunden. Statt eines Zahnradantriebes kann auch ein Direktantrieb vorgesehen sein.

## Patentansprüche

1. Schlagfalle für Nagetiere mit
- einem Auslöseelement (4), an dem ein Köder auslegbar ist,
- einer Spanneinrichtung (6) enthaltend ein Schlagelement (7) und ein Spannelement (8), die um eine Drehachse (9) schwenkbar angeordnet sind zwischen einer gespannten Stellung (S1) und einer ausgelösten Stellung (S2, S3),
- einem Lagesensor (14,14'; 29, 30) zur Erfassung einer Drehstellung (S1, S2, S3) des Schlagelementes (7) und/oder des Spannelementes (8),
- einer Auswerteeinrichtung (18) zur Auswertung eines von dem Lagesensor (14, 14'; 29, 30) erzeugten Signals,
- einer elektrischen Antriebseinrichtung (22) zum Verbringen der Spanneinrichtung (6) von einer ausgelösten Drehstellung (S2, S3) in eine gespannte Drehstellung (S1),
**dadurch gekennzeichnet, dass** der Lagesensor (14, 14'; 29, 30) derart ausgebildet ist, dass das von dem Lagesensor (14, 14'; 29, 30) erzeugte Signal abhängig ist von einer Drehstellung (S1, S2, S3) der Spanneinrichtung (6).

2. Schlagfalle nach Anspruch 1, **dadurch gekennzeichnet, dass** die Auswerteeinrichtung (18) derart eingerichtet ist,
- dass ein von dem Lagesensor (14, 14`; 29, 30) erzeugtes erstes Signal als eine fehlausgelöste Drehstellung (S2) der Spanneinrichtung (6) erkannt wird,
- dass ein von dem Lagesensor (14, 14'; 29, 30) erzeugtes zweites Signal als eine ausgelöste Fangdrehstellung (S3) der Spanneinrichtung (6) erkannt wird und
- dass ein von dem Lagesensor (14, 14'; 29, 30) erzeugtes drittes Signal als eine gespannte Drehstellung (S1) der Spanneinrichtung (6) erkannt wird.

3. Schlagfalle nach Anspruch 1 oder 2, **dadurch gekennzeichnet, dass** der Lagesensor (14, 14'; 29, 30) als ein Magnetsensor (14, 14'; 29, 30) ausgebildet ist, der im Bereich einer Wandung eines Gehäuses (2) der Schlagfalle (1) angeordnet ist und mit einem an dem Schlagelement (7) oder dem Spannelement (8) angeordneten Magnetfelderreger (15) zusammenwirkt.

4. Schlagfalle nach einem der Ansprüche 1 bis 3, **dadurch gekennzeichnet, dass** der Magnetfelderreger als ein Permanentmagnet (15) oder als ein Magnetabschnitt des Schlagelementes (7) oder des Spannelementes (8) ausgebildet ist.

5. Schlagfalle nach einem der Ansprüche 1 bis 4, **dadurch gekennzeichnet, dass** der Magnetsensor (14, 14'; 29, 30) als ein Hall-Sensor oder als ein Reed-Schalter ausgebildet ist.

6. Schlagfalle nach Anspruch 1 oder 2, **dadurch gekennzeichnet, dass** der Lagesensor (14, 14'; 29, 30) als ein mechanischer Sensor oder als ein optoelektronischer Sensor ausgebildet ist.

7. Schlagfalle nach Anspruch 6, **dadurch gekennzeichnet, dass** der mechanische Sensor als ein ein Drehwinkel detektierender Sensor ausgebildet ist, der mit einer drehbaren Achse der Spanneinrichtung (6) fest verbunden ist.

8. Schlagfalle nach einem der Ansprüche 1 bis 7, **dadurch gekennzeichnet, dass** ein erster Magnetsensor (29) in einem solchen Bereich einer Wandung (25, 31) eines als Tunnels (23) ausgebildeten Gehäuses der Schlagfalle angeordnet ist, dass er in Wirkverbindung zu dem an der Spannstrebe (11) des Spannelementes (8) in der gespannten Drehstellung angeordneten Permanentmagneten (15) steht, und dass ein zweiter Magnetsensor (30) in einem solchen anderen Bereich der Wandung (25, 31) des Tunnels (23, 23') angeordnet ist, dass er in Wirkverbindung mit dem an der Spannstrebe (11) des Spannelementes (8) angeordneten Permanentmagneten (15) in der fehlausgelösten Drehstellung der Spanneinrichtung (6) steht.

9. Schlagfalle nach einem der Ansprüche 1 bis 8, **dadurch gekennzeichnet, dass** die Auswerteeinrichtung (K2) eine Fehlauslöseerkennungseinrichtung (19) aufweist, die die von dem Lagesensor (14, 14'; 29, 30) erzeugten Signale daraufhin überprüft, in welcher Drehstellung (S1, S2, S3) sich die Schlageinrichtung befindet, und dass die Fehlauslöseerkennungseinrichtung (19) in Abhängigkeit von der erkannten Drehstellung der Schlageinrichtung (6) ein Ansteuersignal zur Ansteuerung einer elektrischen Antriebseinrichtung (22, 22') der Schlagfalle erzeugt.

10. Schlagfalle nach einem der Ansprüche 1 bis 9, **dadurch gekennzeichnet, dass** die Fehlauslöseerkennungseinrichtung (19) einen Mikrokontroller aufweist und mit einer Sendeeinheit verbunden ist zur Übertragung von Schlagfallen bezogenen Daten über ein Funknetz (20) an eine externe Recheneinheit (21).

11. Schlagfalle nach einem der Ansprüche 1 bis 10, **dadurch gekennzeichnet, dass** die elektrische Antriebseinrichtung (22, 22') einen Servomotor oder einen Getriebemotor aufweist und/oder dass ein Stromsensor vorgesehen ist zum Schutz der elektrischen Antriebseinrichtung (22, 22').

12. Schlagfalle nach einem der Ansprüche 1 bis 11, **dadurch gekennzeichnet, dass** die elektrische Antriebseinrichtung (22, 22') über eine Seilverbindung (27, 27') mit der Spanneinrichtung (6) verbunden ist.

13. Schlagfalle nach einem der Ansprüche 1 bis 11, **dadurch gekennzeichnet, dass** der Antriebseinrichtung (22, 22') ein Stromsensor zugeordnet ist zur Erfassung einer Stromstärke beim Verbringen des Spannelementes (8) von der fehlausgelösten Drehstellung (S2) oder der ausgelösten Fangstellung (S3) in die gespannte Drehstellung (S1), wobei bei erhöhter Stromstärke infolge einer Nichtverrastung des Spannelementes (8) an dem Befestigungselement (34) aufgrund des erhöhten körperlichen Widerstandes ein erneutes Ansteuersignal der Antriebseinheit (22, 22') erzeugt wird, um ein Einrastvorgang des Spannelementes (8) an dem Befestigungselement (34) zu erzeugen.
